# FASCICULE DE BREVET EUROPEEN

(11) **EP 2 958 297 B1**
(45) Date de publication et mention de la délivrance du brevet: **12.09.2018**
(21) Numéro de dépôt: 15172930.8
(22) Date de dépôt: 19.06.2015
(51) Int. Cl.: H04L 29/06, G07C 9/00, H04L 9/32, H04L 29/08, G06K 9/00, G06K 9/03

(54) **DISPOSITIF D'IDENTIFICATION BIOMÉTRIQUE**
BIOMETRISCHE IDENTIFIKATIONSVORRICHTUNG
BIOMETRIC IDENTIFICATION DEVICE

(30) Priorité: 19.06.2014 FR 1455673
(43) Date de publication de la demande: 23.12.2015
(73) Titulaire: MORPHO, 92130 Issy-Les-Moulineaux (FR)
(72) Inventeur: LIPPENS, Nicolas, 92130 ISSY-LES-MOULINEAUX (FR)
(74) Mandataire: Lavialle, Bruno François Stéphane

(56) Documents cités:
- US-A1- 2005 243 199
- US-A1- 2005 275 888
- US-A1- 2014 063 055

## Description

La présente invention concerne l'identification biométrique d'individus aux fins par exemple de contrôler un accès à un lieu ou à des données informatiques.

Un dispositif d'identification comporte généralement une unité de capture de caractéristiques biométriques et une unité informatique reliée à l'unité de capture pour commander celle-ci pour mettre en oeuvre un procédé d'identification biométrique.

Le procédé d'identification biométrique consiste à capturer des caractéristiques biométriques sur la personne à identifier et à comparer les caractéristiques biométriques capturées avec des caractéristiques biométriques préalablement enregistrées dans une base de données.

La mise en oeuvre d'un tel procédé nécessite donc de constituer la base de données contenant les caractéristiques biométriques auxquelles seront comparées les caractéristiques biométriques capturées lors de l'identification. On dénomme enrôlement l'opération qui consiste à capturer une première fois les caractéristiques biométriques d'un individu et à les enregistrer dans la base de données aux fins de réaliser ultérieurement une identification dudit individu. On comprend que la qualité des caractéristiques biométriques enregistrées dans la base de données conditionne l'efficacité de l'identification ultérieure. A cette fin, l'enrôlement est usuellement réalisé sur un poste informatique dédié, par exemple un ordinateur de type PC, qui comporte un écran, est relié à un dispositif de capture par exemple via une liaison série ou USB, et exécute un programme d'enrôlement commandant le dispositif de capture via un programme pilote (ou driver) compatible avec le système d'exploitation de l'ordinateur. Le programme d'enrôlement échange des données en temps réel avec le dispositif de capture de manière à pouvoir afficher à l'écran des informations sur le déroulement de la capture. Ces informations permettent de guider l'individu en cours d'enrôlement dans son positionnement (le positionnement de son ou ses doigts sur le dispositif de capture dans le cas d'une identification par empreintes digitales). Ces informations comportent par exemple des informations de repositionnement de l'individu préalablement au début de la capture proprement dite des caractéristiques biométriques, l'annonce du début de la capture, la progression de la capture, l'annonce de la fin de la capture et une information sur la qualité des caractéristiques biométriques capturées. Le programme d'enrôlement affiche également un formulaire pour obtenir la saisie d'au moins un identifiant de l'individu à enrôler, une page annonçant l'échec de la capture ou la réussite de la capture...

Le recours à un ordinateur n'est pas toujours pratique ni possible et est apparu le besoin de réaliser l'enrôlement directement sur le dispositif d'identification. Or, ceci n'est envisageable que si le dispositif comporte un écran qui permette de surveiller le déroulement de la capture lors de l'opération d'enrôlement de manière à s'assurer que la capture est menée dans des conditions permettant d'atteindre la qualité recherchée. L'adjonction d'un tel écran augmente cependant le coût et l'encombrement du dispositif d'identification.

Pour remédier à ces inconvénients, il a été envisagé, comme dans la demande de brevet US2005/0243199 A1, de pouvoir raccorder au dispositif d'identification un terminal de communication, tel qu'un téléphone de type « smartphone » ou une tablette informatique tactile, sur lequel serait exécuté le programme d'enrôlement. Il faut cependant prévoir que le programme d'enrôlement soit compatible avec les systèmes d'exploitation les plus répandus parmi les terminaux de communication ou prévoir plusieurs versions du programme d'enrôlement. En outre, ceci suppose que le terminal informatique puisse prendre le contrôle du dispositif d'identification au moins temporairement, ce qui pose des problèmes de sécurité.

Un but de l'invention est de fournir un moyen pour réaliser de manière simple l'opération d'enrôlement sur un dispositif d'identification.

A cet effet, on prévoit, selon l'invention, un dispositif d'identification, comportant une unité de capture de caractéristiques biométriques et une unité informatique reliée à l'unité de capture pour commander celle-ci, l'unité informatique étant agencée pour exécuter un programme d'identification et un programme d'enrôlement pour enregistrer, dans une mémoire, des caractéristiques biométriques et des identifiants d'au moins une personne à identifier ultérieurement. Le dispositif comprend des moyens d'échange de données avec un terminal informatique distinct pourvu d'un écran et d'une interface d'entrée. Le programme d'enrôlement comprend un serveur web programmé pour établir avec un navigateur web du terminal un canal de communication bidirectionnel, et le programme d'enrôlement est agencé pour déterminer en temps réel, à partir d'un flux d'images émis par l'unité de capture, des informations sur le déroulement de la capture et pour envoyer en temps réel au navigateur web, via le canal de communication, les informations sur le déroulement de la capture en vue de leur affichage sur le terminal sous forme d'une page web de capture.

Ainsi, le dispositif d'identification utilise l'écran du terminal informatique pour afficher les informations sur le déroulement de la capture. L'interface d'entrée est par exemple un clavier alphanumérique standard, un clavier numérique ou quelques boutons permettant de faire apparaître des menus contextuels et d'opérer des choix dans ces menus (à noter que l'écran, s'il est tactile, peut servir également de clavier pour le dispositif d'identification), un lecteur de mémoire... Avec l'invention, le serveur web transmet des données au navigateur web de manière continue et ainsi peut mettre à jour les informations présentées à l'individu à enrôler pour lui permettre de suivre le déroulement de la capture. De préférence, le canal de communication bidirectionnel met en oeuvre un protocole conforme à la norme RFC 6455.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 représente schématiquement un dispositif d'autorisation d'accès conforme à l'invention ;
- la figure 2 illustre schématiquement le flux des données entre les différents composants du dispositif selon un mode de mise en oeuvre de ce dispositif ;
- la figure 3 illustre schématiquement le flux des données entre les différents composants du dispositif selon un autre mode de mise en oeuvre d'un tel dispositif.

L'invention est ici décrite en application à un dispositif d'identification dédié au contrôle de l'accès à un lieu. Le dispositif d'identification est donc destiné à être monté sur un mur extérieur du lieu en question, au voisinage d'une porte d'accès à celui-ci. Bien entendu cependant, d'autres applications du dispositif d'identification sont envisageables.

L'invention est ici décrite en relation avec une identification par reconnaissance d'empreintes digitales. Il va de soi que l'invention est utilisable pour tout type de caractéristiques biométriques.

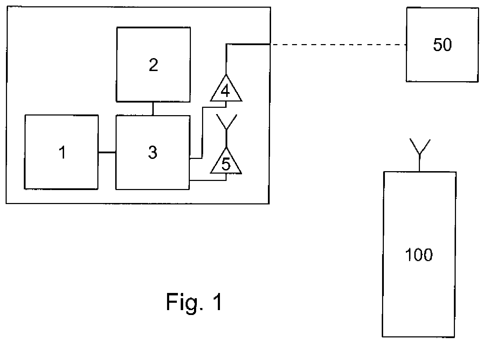

En référence à la figure 1, le dispositif d'identification selon l'invention, comporte :
- une unité 1 de capture de caractéristiques biométriques ;
- une unité 2 de verrouillage de la porte ; et
- une unité informatique 3 reliée à l'unité de capture 1 et à l'unité de verrouillage 2 pour commander celles-ci.

L'unité de capture 1 comprend un capteur optique, de type connu en lui-même, permettant de capturer des images d'un ou plusieurs doigts des utilisateurs de manière à y détecter par traitement d'images des caractéristiques biométriques.

L'unité informatique 3 comprend un circuit informatique avec un processeur, une mémoire de masse, une mémoire de type RAM, des moyens 4 de liaison à un serveur distant 50 et des moyens 5 de liaison sans fil de type WIFI. La mémoire de masse contient un système d'exploitation, un programme d'identification et un programme d'enrôlement.

Le système d'exploitation est connu en lui-même.

Le programme d'identification, connu en lui-même, est agencé pour :
- commander au module de capture 1 la capture d'une image d'empreinte digitale d'un ou des doigts appliqués contre le capteur du module de capture 1 par un candidat à l'identification,
- extraire de l'image des caractéristiques biométriques,
- comparer ces caractéristiques biométriques capturées à des caractéristiques biométriques stockées dans une base de données enregistrée dans la mémoire de masse de l'unité informatique 3,
- refuser le déverrouillage de la porte si la comparaison est infructueuse,
- informer le serveur distant 50 du succès de l'identification si la comparaison est fructueuse, recevoir alors du serveur distant 50 une instruction de déverrouillage et commander le module de verrouillage 2 pour l'ouverture de la porte.

Le programme d'enrôlement est agencé pour :
- commander au module de capture 1 la capture d'une image d'empreinte digitale d'un candidat à l'enrôlement,
- extraire de l'image des caractéristiques biométriques,
- enregistrer les caractéristiques biométriques et des identifiants du candidat à l'enrôlement dans la base de données.

Selon l'invention, le programme d'enrôlement comprend un serveur web programmé pour établir via les moyens de communication sans fil 5 un canal de communication bidirectionnel avec un navigateur web d'un terminal informatique distinct 100. Le terminal informatique distinct 100 est par exemple un smartphone, une tablette informatique ou un ordinateur portable. Le terminal informatique distinct 100 est connu en lui-même et ne fait pas partie de l'invention : il est pourvu d'un écran et d'un clavier, et possède une unité informatique programmée pour opérer un navigateur web classique. Le canal de communication bidirectionnel et full-duplex fonctionne selon un protocole conforme à la norme RFC 6455 (norme communément appelée « web socket »). Selon ce protocole, le navigateur web envoie une première requête de connexion au serveur web, ce qui va établir le canal de communication entre le serveur web et le navigateur web et va permettre au serveur web d'envoyer des données au navigateur web sans autre autorisation ni requête de ce dernier.

Le programme d'enrôlement est en outre agencé pour déterminer en temps réel, au moyen de l'unité de capture 1, des informations sur le déroulement de la capture et pour envoyer en temps réel au navigateur web, via le canal de communication, les informations sur le déroulement de la capture en vue de leur affichage sur le terminal 100 sous forme d'une page web de capture. Les informations sur le déroulement de la capture comprennent :
- une image produite par l'unité de capture,
- une information de repositionnement du candidat à l'enrôlement par rapport à l'unité de capture,
- une information de qualité de la capture.

Le programme d'enrôlement est en outre agencé pour envoyer au navigateur web des pages avec des champs à renseigner.

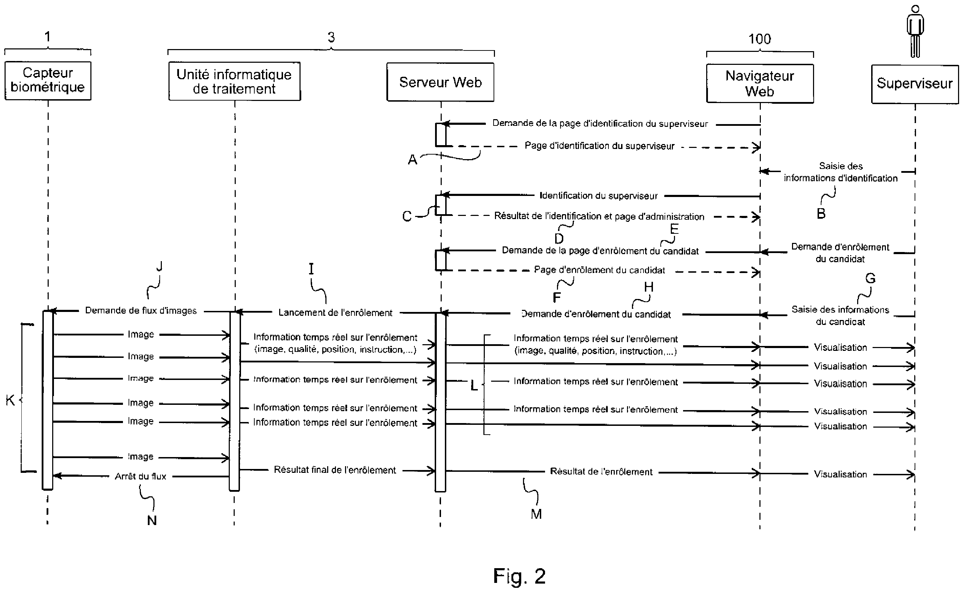

Ainsi, en fonctionnement et en référence à la figure 2, après que le navigateur web a envoyé une requête de connexion au serveur web, le programme d'enrôlement est agencé pour :
- initier le début de la procédure d'enrôlement en envoyant au navigateur web une page d'identification d'un superviseur de l'enrôlement (étape A). Cette page d'identification comporte un champ à renseigner par des informations d'identifications comprenant un identifiant du superviseur et un code d'accès (étape B) ;
- subordonner la poursuite de la procédure l'enrôlement à une vérification du contenu des champs renseignés (étape C) ;
- envoyer au navigateur web (étape D) une page de choix permettant au superviseur soit de débuter une procédure d'enrôlement soit d'effectuer une action de paramétrage ou autre (nous nous intéressons ici à la procédure d'enrôlement uniquement, le superviseur choisissant de débuter une telle procédure lors de l'étape E au cours de laquelle une demande de page d'enrôlement est envoyée au serveur web) ;
- envoyer au navigateur web (étape F) une page d'identification d'un candidat à l'enrôlement (ou page d'enrôlement) comportant un champ à renseigner avec un identifiant du candidat à l'enrôlement, les périodes pendant lesquelles le candidat est autorisé à accéder au lieu... Les informations sont saisies par le superviseur au cours de l'étape G et la demande d'enrôlement est envoyée au serveur web (étape H) ;
- lancer l'enrôlement (étape I) et émettre une demande de flux d'images vers le capteur (étape J) ; des images sont alors envoyées périodiquement par le capteur vers l'unité informatique 3 (étapes K) ;
- envoyer au navigateur web (étapes L) une page de capture comportant des indications sur les actions à mener par le candidat à l'enrôlement pour mener à bien la capture et pour associer cet identifiant aux caractéristiques biométriques capturées.

La page de capture comprend une zone d'affichage du champ en regard du capteur. Le serveur web envoie périodiquement au navigateur web les données devant être affichées dans cette zone ainsi que des informations de repositionnement. Ces données et informations sont extraites des données envoyées par le module de capture 1 à l'unité informatique 3.

Le programme d'enrôlement est agencé pour évaluer une qualité de l'image capturée et pour recommencer la capture si la qualité de l'image est inférieure à un seuil. Si la qualité de l'image est suffisante, le serveur web envoie au navigateur web (étape M) une page annonçant la fin de la procédure d'enrôlement (il demande alors également l'arrêt du flux d'images au module de capture 1 lors de l'étape N) et offrant au superviseur le choix de réaliser un autre enrôlement ou une autre opération (paramétrage).

De préférence, le programme d'enrôlement comprend plusieurs jeux de paramétrage de l'envoi des informations sur le déroulement de la capture. Les paramètres portent par exemple sur la taille des informations envoyées et sur la périodicité des envois. Le choix du jeu de paramètres utilisé est effectué en fonction par exemple :
- du type de terminal informatique, et/ou
- du type de navigateur web, et/ou
- d'un débit d'échange des données avec le navigateur web...

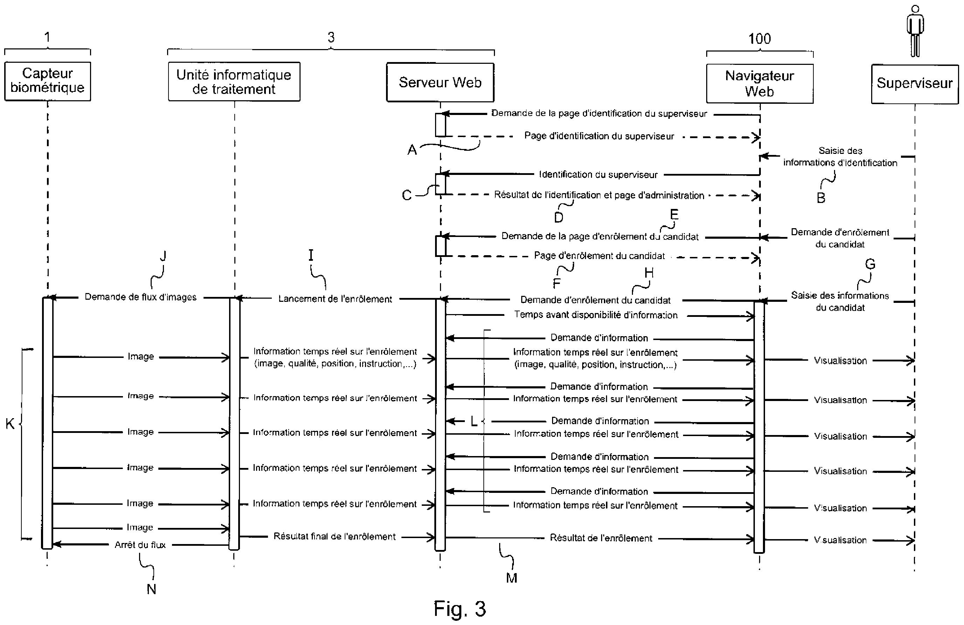

Sur la figure 3, dans le cas d'un fonctionnement par scrutation ou polling temps-réel, le navigateur web interroge de manière répétée le serveur web pour obtenir des informations à afficher à propos du déroulement de la capture et le serveur web fournit, avec chaque réponse qui suit une interrogation du navigateur web, le temps qui va s'écouler avant la réponse suivante. Ceci permet de limiter un décalage entre l'affichage et la capture.

Bien entendu, l'invention n'est pas limitée aux modes de réalisation décrits mais englobe toute variante entrant dans le champ de l'invention telle que définie par les revendications.

En particulier, l'unité informatique peut commander directement l'unité de verrouillage ou initier une procédure de déverrouillage permettant à un serveur distant de commander directement ou indirectement l'unité de verrouillage.

Le terme « accès » doit être considéré au sens large et couvre par exemple aussi bien l'accès à un lieu tel qu'un bâtiment qu'à des fichiers informatiques.

Le droit d'accès peut être total ou partiel (certains jours ou certains horaires par exemple).

Le programme d'enrôlement peut être un programme lancé spécifiquement pour l'enrôlement ou être une partie d'un programme gérant globalement le fonctionnement du dispositif.

Le programme d'identification peut être un programme lancé spécifiquement pour l'identification ou être une partie d'un programme gérant globalement le fonctionnement du dispositif.

La base de données biométriques peut être hébergée dans le serveur distant 50.

Le dispositif d'identification peut comprendre une unité de lecture écriture d'une mémoire d'un support transportable, comme une carte magnétique ou une carte à circuit intégré. Ainsi, les caractéristiques biométriques capturées lors de l'enrôlement sont stockées dans la mémoire de la carte et non plus dans une base de données stockée dans le dispositif d'identification. Lors de l'identification, le candidat doit présenter sa carte et appliquer son ou ses doigts contre le capteur biométrique.

En variante, la communication entre le serveur web et le navigateur peut fonctionner selon un protocole de type « polling ». Le navigateur web demande régulièrement au serveur web si des informations sont disponibles et, le cas échéant, le serveur web les transfère au navigateur web qui les affiche sur le terminal informatique 100.

Le temps entre deux demandes peut être fixé à l'avance (lorsque le serveur web fournit la page au navigateur web, la page contient le délai à utiliser) ou modifié au cours de l'enrôlement (lorsque le serveur web fournit de nouvelles informations à afficher dans le navigateur web, il peut en profiter pour lui fournir le délai avant la mise à disposition de nouvelles informations). Le navigateur web attendra alors ce délai avant d'effectuer une nouvelle requête. Dans le cas du polling, le temps entre la mise à disposition de données par le serveur web, et la récupération de ces données par le navigateur web devra être fixé suffisamment court pour être qualifié de « temps réel » (l'utilisateur ne doit pas voir de décalage important entre ce qui se passe sur le capteur et ce qui est affiché dans le navigateur).

## Revendications

1. Dispositif d'identification, comportant une unité (1) de capture de caractéristiques biométriques et une unité (3) informatique reliée à l'unité de capture pour commander celle-ci, l'unité informatique étant agencée pour exécuter un programme d'identification et un programme d'enrôlement pour enregistrer, dans une mémoire, des caractéristiques biométriques et des identifiants d'au moins une personne à identifier ultérieurement, ledit dispositif comprenant des moyens d'échange de données avec un terminal informatique (100) distinct pourvu d'un écran et d'une interface d'entrée, le programme d'enrôlement comprenant un serveur web programmé pour établir avec un navigateur web du terminal un canal de communication bidirectionnel, et le programme d'enrôlement étant agencé pour déterminer en temps réel, à partir d'un flux d'images émis par l'unité de capture, des informations sur le déroulement de la capture et pour envoyer en temps réel au navigateur web, via le canal de communication, les informations sur le déroulement de la capture en vue de leur affichage sur le terminal sous forme d'une page web de capture.

2. dispositif selon la revendication 1, dans lequel le canal de communication bidirectionnel est full-duplex.

3. dispositif selon la revendication 2, dans lequel le canal de communication bidirectionnel est selon un protocole conforme à la norme RFC 6455.

4. Dispositif selon la revendication 1, dans lequel le programme d'enrôlement est agencé pour envoyer au navigateur web une page d'identification d'un superviseur de l'enrôlement comportant au moins un champ à renseigner et pour subordonner la poursuite de l'enrôlement à une vérification du contenu du champ renseigné.

5. Dispositif selon la revendication 1, dans lequel le programme d'enrôlement est agencé pour envoyer au navigateur web une page d'identification d'un candidat à l'enrôlement comportant au moins un champ à renseigner avec un identifiant du candidat à l'enrôlement et pour associer cet identifiant aux caractéristiques biométriques capturées.

6. Dispositif selon la revendication 1, dans lequel les informations sur le déroulement de la capture comprennent une image produite par l'unité de capture.

7. Dispositif selon la revendication 1, dans lequel les informations sur le déroulement de la capture comprennent une information de repositionnement du candidat à l'enrôlement par rapport à l'unité de capture.

8. Dispositif selon la revendication 1, dans lequel les informations sur le déroulement de la capture comprennent une information de qualité de la capture.

9. Dispositif selon la revendication 1, dans lequel le programme d'enrôlement est agencé pour évaluer une qualité de l'image capturée et pour recommencer la capture si la qualité de l'image est inférieure à un seuil.

10. Dispositif selon la revendication 1, dans lequel le programme d'enrôlement comprend plusieurs jeux de paramétrage de l'envoi des informations sur le déroulement de la capture en fonction par exemple :
- du type de terminal informatique, et/ou
- du type de navigateur web, et/ou
- d'un débit d'échange des données avec le navigateur web.

11. Dispositif d'autorisation d'accès comprenant un dispositif (2) de verrouillage de l'accès et un dispositif d'identification qui est conforme à l'une quelconque des revendications précédentes et qui est relié au dispositif de verrouillage pour commander celui-ci.

## Patentansprüche

1. Identifikationsvorrichtung, umfassend eine Erfassungseinheit (1) zur Erfassung biometrischer Eigenschaften und eine Recheneinheit (3), die mit der Erfassungseinheit verbunden ist, um diese zu steuern, wobei die Recheneinheit so ausgebildet ist, dass sie ein Identifikationsprogramm und ein Einschreibungsprogramm zum Speichern biometrischer Eigenschaften und Kennungen mindestens einer später zu identifizierenden Person in einem Speicher ausführt, wobei die Vorrichtung Mittel zum Datenaustausch mit einem separaten Computerterminal (100) umfasst, der mit einem Bildschirm und mit einer Eingangsschnittstelle versehen ist, wobei das Einschreibungsprogramm einen programmierten Webserver umfasst, um mit einem Webbrowser des Terminals einen bidirektionalen Kommunikationskanal aufzubauen, und wobei das Einschreibungsprogramm so ausgebildet ist, dass es in Echtzeit anhand eines Flusses von Bildern, die von der Erfassungseinheit gesendet werden, Informationen über den Ablauf der Erfassung bestimmt und dass es die Informationen über den Ablauf der Erfassung zur deren Anzeige auf dem Terminal in Form einer Erfassungswebseite über den Kommunikationskanal in Echtzeit an den Webbrowser sendet.

2. Vorrichtung nach Anspruch 1, bei der der bidirektionale Kommunikationskanal ein Vollduplex-Kommunikationskanal ist.

3. Vorrichtung nach Anspruch 2, bei der der bidirektionale Kommunikationskanal gemäß einem Protokoll ist, das der Norm RFC 6455 entspricht.

4. Vorrichtung nach Anspruch 1, bei der das Einschreibungsprogramm so ausgebildet ist, dass es dem Webbrowser eine Identifikationsseite zur Identifikation eines Supervisors der Einschreibung sendet, die mindestens ein auszufüllendes Feld umfasst, und dass es die Fortsetzung der Einschreibung von einer Verifizierung des Inhalts des ausgefüllten Feldes abhängig macht.

5. Vorrichtung nach Anspruch 1, bei der das Einschreibungsprogramm so ausgebildet ist, dass es dem Webbrowser eine Identifikationsseite für einen Kandidaten zur Einschreibung sendet, die mindestens ein auszufüllendes Feld mit einer Kennung des Kandidaten zur Einschreibung umfasst, und dass es diese Kennung mit den erfassten biometrischen Eigenschaften verknüpft.

6. Vorrichtung nach Anspruch 1, bei der die Informationen über den Ablauf der Erfassung ein von der Erfassungseinheit erzeugtes Bild umfassen.

7. Vorrichtung nach Anspruch 1, bei der die Informationen über den Ablauf der Erfassung eine Information zur Repositionierung des Kandidaten zur Einschreibung in Bezug auf die Erfassungseinheit umfassen.

8. Vorrichtung nach Anspruch 1, bei der die Informationen über den Ablauf der Erfassung eine Information der Qualität der Erfassung umfassen.

9. Vorrichtung nach Anspruch 1, bei der das Einschreibungsprogramm so ausgebildet ist, dass es eine Qualität des erfassten Bildes beurteilt und die Erfassung erneut startet, wenn die Qualität des Bildes unter einem Schwellenwert ist.

10. Vorrichtung nach Anspruch 1, bei der das Einschreibungsprogramm mehrere Parametrisierungssätze zum Senden von Informationen über den Ablauf der Erfassung beispielsweise in Abhängigkeit
- der Art von Computerterminal und/oder
- der Art von Webbrowser, und/oder
- einer Datenaustauschrate mit dem Webbrowser umfasst.

11. Zugangsberechtigungsvorrichtung, umfassend eine Vorrichtung (2) zur Verriegelung des Zugangs und eine Identifikationsvorrichtung, die gemäß einem der vorhergehenden Ansprüche ist und die mit der Verriegelungsvorrichtung verbunden ist, um diese zu steuern.

## Claims

1. An identification device comprising a capture unit (1) for capturing biometric characteristics and a computer unit (3) connected to the capture unit in order to control it, the computer unit being arranged to execute an identification program and a registration program for storing in memory both biometric characteristics and also identifiers of at least one person who is to be identified subsequently, said device including means for exchanging data with a distinct computer terminal (100) provided with a screen and an input interface, the registration program comprising a web server programmed to co-operate with a web browser of the terminal to establish a bidirectional communication channel, and the registration program being arranged to act in real time from an image stream captured by means of the capture unit to determine information about the progress of capture and to send in real time to the web browser, via the communication channel, the information about the progress of capture so that it can be displayed on the terminal in the form of a capture web page.

2. A device according to claim 1, wherein the bidirectional communication channel is a full duplex channel.

3. A device according to claim 2, wherein the bidirectional communication channel uses a protocol in compliance with the RFC 6455 standard.

4. A device according to claim 1, wherein the registration program is arranged to send to the web browser an identification page for identifying a registration supervisor, which page includes at least one field that is to be completed, and to make continuation of registration dependent on successful verification of the content of the completed field.

5. A device according to claim 1, wherein the registration program is arranged to send to the web browser an identification page for a candidate for registration including at least one field that is to be completed with an identifier of the candidate for registration and to associate that identifier with the captured biometric characteristics.

6. A device according to claim 1, wherein the information about capture progress includes an image produced by the capture unit.

7. A device according to claim 1, wherein the information about capture progress includes information about repositioning the candidate for registration relative to the capture unit.

8. A device according to claim 1, wherein the information about capture progress includes information about the quality of the capture.

9. A device according to claim 1, wherein the registration program is arranged to evaluate the quality of the captured image and to restart capture if the quality of the image is below a threshold.

10. A device according to claim 1, wherein the registration program has a plurality of parameter settings for sending information about capture progress, e.g. as a function:
• of the type of computer terminal; and/or
• of the type of web browser; and/or
• of a rate at which data is to be exchanged with the web browser.

11. An access authorization device including a locking device (2) for locking access and an identification device in accordance with any preceding claim and connected to the locking device in order to control it.
